# EUROPEAN PATENT APPLICATION

(11) **EP 1 467 464 A1**
(43) Date of publication of application: **13.10.2004**
(21) Application number: 02796790.0
(22) Date of filing: 13.12.2002
(51) Int. Cl.: H02J 7/14

(54) **CIRCUIT AND METHOD OF CONTROLLING VEHICLE BATTERY CHARGES**

(30) Priority: 27.12.2001 ES 200102897
(71) Applicant: Lear Automotive (EEDS) Spain, S.L., 43800 Valls, Tarragona (ES)
(72) Inventor: BORREGO BEL, Carles, 43800 Valls (Tarragona) (ES); FIGUEROLA BARRUFET, Gabriel, 43800 Valls (Tarragona) (ES)
(74) Representative: Primo de Rivera y Urquijo, Jose Antonio
(86) International application number: PCT/ES2002/000597
(87) International publication number: WO 2003/056683

(57) **Abstract**

It encompasses a battery (B1) that feeds network charges (1) connected to one of its terminals (2), a generator (G) in the mentioned network (1), a battery (B2) for a secondary network (3) and start-up functions, and a BC02 controlled switch which depending on the status of the charge of (B1) and (B2) and the demands of charges C₁, C₂ from networks (1) and (3), enables current flow between networks (1) and (3) in any direction, including a power barrier diode (4) That bridges the mentioned BC02 switch providing a current flow smaller than the one flowing through the BC02, when it is closed, and also smaller than the current going from the generator (G) to battery (B1). This method provides energy transference between batteries (B1) and (B2)s.

## Description

### INVENTION FIELD

This invention concerns an automobile management system equipped with at least two batteries where one of them is used to power the service network (integrating a number of different types of charges), and the second battery is basically designed for start-up operations (powering a separate network that includes the starter), encompassing a control unit or module that acts on at least one switch that establishes a connection between the two mentioned batteries and networks to give priority to the engine start-up function. In concrete, this invention provides an architecture, which independently of the mentioned switch establishes a permanent link between the networks and service battery and the start-up battery, thus guaranteeing that the start-up battery and the network, where it is connected to, always receive.

### HISTORY OF THE INVENTION

Patent GB-A-2 302 622 describes an automobile management system with two batteries. It is composed by: a first battery labeled B, designed to power a series of charges in a primary service network connected to one of the terminals of the mentioned B1 battery. In addition, to this battery, a generator is connected. A second battery B2, is designed to power a secondary network dedicated essentially to start-up functions, and a switch managed by a control module or unit, which depending on the charging status of both batteries, B1 and B2, and the charging demands from the respective networks, enables the current flow between batteries B1, B2 and the corresponding networks, in both directions, always giving priority to the start-up functions.

Other patents such as DE-A196 45 944 A1 and US-A- 6.232.674 describe architectures and systems deigned for the same explained purpose and provide similar services.

Nevertheless, the inventors have detected that in these systems previously developed, the link between both networks and the associated batteries is controlled depending on the needs of the consumption charges and the charge status of batteries B1 and B2, giving priority to start-up, but sometimes, remaining the B2 start-up battery disconnected from the B1 service battery and the generator, running the risk of having battery B2 being discharged by its own network through unwanted leaks, etc., perhaps reaching a charge level below the minimum limit set to guarantee its operation if needed at that moment. This invention provides a system and method to ensure the powering at all times of battery B2 and the start-up network ant through this, the permanent recharging of the B" start-up battery, which through this method it is ready to provide service.

### BRIEF DESCRIPTION OF THE INVENTION

The main feature of this invention is the inclusion of a unidirectional current flow device that establishes a bridge or permanent connection between the terminals of the mentioned switched controlled by this control module, set up between the two networks, a primary service network (which establishes a series of charges and is connected to the generator), and a secondary start up network and its corresponding B1 and B2 batteries, as previously mentioned using this unidirectional current flow device to ensure the transfer flow of electrical energy between batteries B1 and B2 and the associated networks. It is important to emphasize the fact that this unidirectional current flow device provides current flow smaller than the one flowing through the aforementioned control module's switch, when it is closed, and it is also smaller than the supply current from the generator (G) feeding battery B1. What is essential is that the current flow circulating through circulating through this unidirectional current flow device permits and ensures constant feeding to the start-up network and therefore, the permanent recharging of the B2 start-up battery with the assuredness of knowing that the unidirectionality prevent s battery B2 from being discharged, if a problem arises in this network, and the with the security of knowing that the current flow will never exceed a given safety maximum limit.

In accordance with the preferred use of this invention, the mentioned unidirectional flow device connected between the two service and start-up networks is a power barrier diode.

On the other hand, the control unit or module that manages the connection / disconnection of the mentioned switch, encompasses a microcontroller, a condition status sensor (SOH) and a charge status sensor (SOC).

In a preferred version of this invention, the controllable switch that connects battery B1 and its service network with battery B2 and the network that includes the start-up device is a switch with disconnection or battery cut off (BCO) from the B1 battery functions.

In order to improve the understanding of the characteristics of the invention being described here, we will now provide its description using as reference a diagram sheet where in one sole figure, a sample, which does not limit the possible uses of the invention, has bee provided.

### Brief description of the drawings

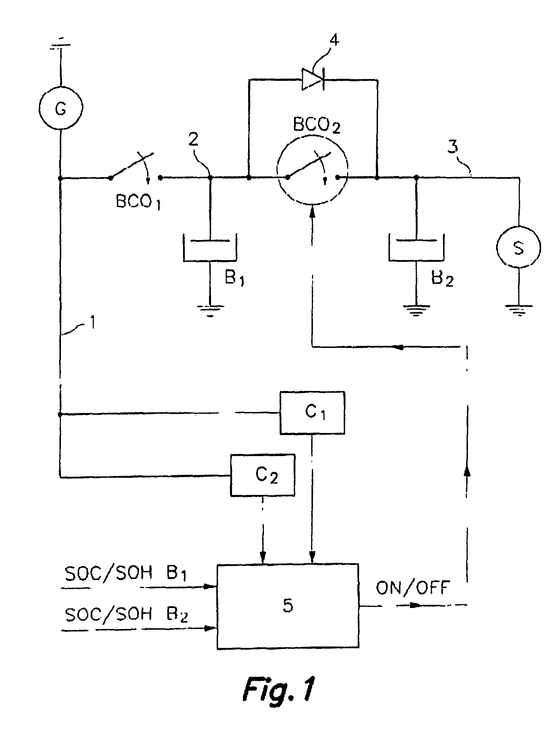

Figure 1 shows the architecture implemented by the proposed solution for this invention, encompassing a primary battery B1 connected to a generator (G) which supplies to charges C₁ and C₂; and as second start-up battery that powers an electric starter motor (S).

### DETAILED DESCRIPTION OF A USAGE EXAMPLE

Figure 1 shows the Architecture and the system as they are known, just as they have been described in patent GB-A-2 302 622, which encompasses: a first B1 designed to feed charges C₁ and C₂ belonging to a first service network (1) that is connected to one of the terminals (2); a generator (G) also connected to terminal 2 of battery B1 and which feed the mentioned battery B1, network 1 and eventually, a second battery B2 designed to power a second network (3) used essentially for start-up functions including in particular, the electrical starter motor (S); a battery disconnection switch BCO (Battery Cut Off) type associated to each battery B1, B2, and which as it is common technical knowledge, ensures the automatic disconnection of the battery in case of accident, being switch BC01 the one associated to battery B1 and switch BCO2, the one associated to battery B2 and enabling the BCO2 switch the current flow between the tow networks 1 and 3 in any direction. The BCO2 switch will be controlled by a control unit or module (5) that continuously monitors the charging status (SOC) of both batteries B1, B2 on one hand, and on the other, the charge demands C₁ C₂ of networks 1 and 3, and depending on consumption demands and the status detected perform the connection / disconnection of the BCO2 switch, thus allowing energy to be transferred between batteries B1 and B2 and the respective networks 1 and 3. This control unit or module (5) includes a general microprocessor and a charge status sensor (SOC).

The contribution made by this invention to the aforementioned architecture and management system consists on, as shown in the usage example, the inclusion of a power barrier diode (4) that establishes a bridge between the terminals of the previously mentioned BCO2 switch. This diode is a unidirectional current flow device, which as it has been previously described under the beginning of the invention, establishes a permanent connection between the two networks 1 and 3, independently of the status of the BCO2 switch, running through the mentioned diode (4), a current flow smaller than the one flowing through the mentioned BCO2 switch, when it is closed, and also smaller than the feeding current from the generator (G) to battery B1. But, using this type of structure, the powering at all times of the start-up network (3) and the permanent recharging of the start-up battery B are always ensured, permitting its use at all times with an appropriate response guaranteed.

In order to have a better understanding of the operation and functionalities of the proposed system, the description of the preferred usage sample is complemented with intentions tables where the control on switch BCO2 is shown, as a function of charge status

(SOC) bands or ranges of batteries B1 and B2, and depending on whether priority is given to start-up or service.

**Table 1**

| Start-up priority | B2's SOC | | |
|---|---|---|---|
| B1's SOC | 0-50% | 50%-85% | 85%-100% |
| 0-50% | ON | ON | OFF |
| 50%-85% | ON | ON | OFF |
| 85%-100% | ON | ON | OFF |

In fact, Table 1 shows that, independently of the charge status of the service battery B1, the BCO2 switch will almost always remain connected allowing the transfer of energy from network 1 with the generator (G) and the B1 battery to battery B2, while it needs recharging (when the band between 85%-100% is reached, the BCO2 switch is disconnected). In agreement with the proposal of the invention, the power barrier diode (4) in addition provides at all times, a charging flow towards the B2 battery.

**Table 2**

| Service priority | B2's SOC | | |
|---|---|---|---|
| B1's SOC | 0-50% | 50%-85% | 85%-100% |
| 0-50% | ON | OFF | OFF |
| 50%-85% | ON | OFF | OFF |
| 85%-100% | ON | ON | ON |

Table 2 shows how only if service battery B1 is well charged or if the start-up battery B2 is very discharged, switch BCO2 is connected allowing battery B2 to be charged. In al other cases, the mentioned BCO2 switch is disconnected and the B2 battery only receives current through the mentioned diode (4).

With relation to these tables, it is important to mention that bands (0-50% of SOC) are for illustration purposes and that more divisions can be set up for different values depending on the type of battery used and the number of charges / operating conditions of the two networks 1 and 3.

In a variation of the preferred usage of the invention, the mentioned control unit (5) has been designed to include the means to detect the condition status of both batteries SOH, in addition to the known reception of the charge status. In the previously referred Tables 1 and 2, the parameter showing the SOH status of the batteries has not been indicated.

As far as the method used to apply the system in accordance with the invention, it is composed by the following stages:
a) Perform the constant monitoring of the SOC of the mentioned B1 and B2 batteries and the charge demands of each one of the networks 1 and 3, and to provide the selective operation on the aforementioned BCO2 switch allowing the connection of one B1 or both batteries B1 and B2 to both networks 1 and 3; and
b) Provide unidirectional constant current flow from the service network (1) with charges C₁ and C₂ feed from battery B1 to the network (2), which includes battery B2 and at least an electrical starter motor (S), with a current flow smaller to the once flowing through the BCO2 switch when closed, and also smaller to the one flowing from the generator (G) to battery B1.

A preferred version of the monitoring of the charge status SOC is complemented with the additional monitoring of SOH condition status of each one of batteries B1 and B2.

As previously stated, stage (b) which supplies a permanent unidirectional current flow from network (1) to network (2), is performed using a unidirectional current flow device such as a power barrier diode (4), which in fact bridges the described BCO2 switch.

It is evident that the principles of this invention could be put into practice using different means than the ones described here, furnishing the indicated functionality, detailing the essentiality of the invention in the following claims.

## Claims

1. Automobile management system using two batteries comprising a primary battery (B1) designed to power a primary service network (1) connected to one of its terminals (2), to which a generator (G) is also connected, a second battery (B2) designed to power a secondary network (3) essentially assigned to start-up functions and a BCO2 switch managed by a control unit or module (5) which, depending on the status of the charges of both batteries (B1) and (B2) and the charge demands of the mentioned networks (1) and (3), enables current flow between the two networks (1) and (3) in any direction, its **characterized by** the use of a unidirectional current flow device (4) that can bridge permanently the aforementioned BCO2 switch located between the two networks (1) and (3) and respectively powered by the mentioned batteries (B1) and (B2), whose device (4) provides current flow towards the start-up battery (B2) smaller than the current flow through the BCO2 switch, when it is closed, and also smaller than the current from generator (G) to battery (B1).

2. System, according to claim 1, **characterized** because said control unit (5) includes means to detect the condition status of both batteries (SOH).

3. System, according to claim 1, **characterized** because said unidirectional flow device (5) connected between the two networks (1) and (3) is a power barrier diode.

4. System, according to claim 2, **characterized** because the control module (5) controlling the connection / disconnection of the mentioned BCO switch, includes a microcontroller, a condition status sensor (SOH) and a charge status sensor (SOC).

5. System, according to claim 1, **characterized** because the mentioned controllable switch that connects the battery (B1) and the network (1) with the battery (B2) and network (3) is a switch with BCO (Battery Cut Off) disconnection functions from the battery (B1).

6. Management method of a car with two batteries, which comprises a first battery (B1) designed to power a first service network (1) connected to one of its terminals (2), to which a generator (G) is also connected, a second battery (B2) designed to power a second network (3) essentially assigned to start-up functions and a BCO2 switch managed by a control unit or module (5) which depending on the status of the charges of both batteries (B1) and (B2) and the charge demands C₁ and C₂ of the mentioned networks (1) and (3), enables current flow between the two networks (1) and (3) in any direction, **characterized by**:
a) performing a permanent monitoring of the SOC of batteries (B1) and (B2) and the charge demands of C₁ and C₂ and provide an actuation on the mentioned switch BCO2, allowing the connection of one or both batteries B1 and B2 to both networks (1) and (3) with energy transfer between them; and
b) providing permanent unidirectional current flow from network (1) containing battery B1 to network (2), which includes battery B2 with a current flow smaller than the one circulating through the mentioned BCO2 switch, when it is closed, and also smaller than the feeding current to battery (B1) from generator (G).

7. Method, according to claim 6, **characterized** because the monitoring of the charge status SOC of the a) stage, is complemented with the monitoring of the condition status of the battery.

8. Method, according to claim 6, **characterized** because said b) stage for providing a permanent unidirectional current flow from network (1) to network (2) is made across a unidirectional current flow device such as a power diode (4).
